# EUROPÄISCHE PATENTSCHRIFT

(11) **EP 4 458 340 B1**
(45) Veröffentlichungstag und Bekanntmachung des Hinweises auf die Patenterteilung: **03.12.2025**
(21) Anmeldenummer: 24174132.1
(22) Anmeldetag: 03.05.2024
(51) Int. Cl.: A61G 7/065, A61G 7/07, A61G 13/12

(54) **MEDIZINISCHES LAGERUNGSKISSEN UND SEINE HERSTELLUNG**
MEDICAL STORAGE PAD AND ITS MANUFACTURE
COUSSIN DE RANGEMENT MÉDICAL ET SA FABRICATION

(30) Priorität: 04.05.2023 DE 102023111649
(43) Veröffentlichungstag der Anmeldung: 06.11.2024
(73) Patentinhaber: LÜBERG foam solutions GmbH, 90402 Nürnberg (DE)
(72) Erfinder: ENGEL, Christian, 31840 Hessisch Oldendorf (DE)
(74) Vertreter: Götz, Gudrun Veronika

(56) Entgegenhaltungen:
- DE-T2- 69 810 802
- DE-U1- 29 905 340
- US-A1- 2008 085 944
- US-B2- 7 849 540

## Beschreibung

Die Erfindung betrifft ein Lagerungskissen zur Lagerung von Körperteilen, insbesondere zur Verwendung im medizinischen Bereich, aufweisend einen, vollständig oder teilweise aus einem fluiddurchlässigen Material gefertigten Formkörper, welcher Formkörper in einem Teilbereich seiner Oberfläche mit einem fluiddichten Oberflächenmaterial umzogen ist.

Die Erfindung betrifft außerdem ein Verfahren zur Herstellung eines Lagerungskissens, insbesondere zur Verwendung im medizinischen Bereich.

Lagerungskissen werden allgemein im medizinischen, orthopädischen und/oder therapeutischen Bereich eingesetzt und dienen zur stabilisierenden Lagerung von Patienten oder deren Körperteilen. Zu diesem Zweck weisen Lagerungskissen eine Struktur zum passgenauen Anlagern an ein Körperteil auf, bspw. den Hinterkopf, und sind mit einem formstabilen Material gebildet. Bekannt sind solche Lagerungskissen bspw. aus der DE 1699528 U oder der DE 10 2013 102 297 A1. Um die Wiederverwendbarkeit von Lagerungskissen im medizinischen Bereich zu gewährleisten, sind verschiedene Normen einzuhalten (bspw. DIN 10 993-5; DIN 10 993-10; DIN 10 993-12). Um das Lagerungskissen bspw. reinigen zu können, darf es keine Flüssigkeit aufsaugen. Grundsätzlich könnte ein Lagerungskissen aus einem fluiddichten Material wie Polyethylen hergestellt werden. Polyethylen ist jedoch hart und unbequem und daher für den medizinischen Bereich nur eingeschränkt einsetzbar. Lagerungskissen aus weichem Material benötigen eine dichtende Hülle.

Bekannt ist im Stand der Technik, die dichtende Hülle durch Besprühen eines Formkörpers von allen Seiten bereitzustellen. Nachteilig an dieser Variante ist, dass die Beschichtung schnell verschleißt. Beim Besprühen kann es außerdem im Bereich von Kanten zu Materialanhäufung des Beschichtungsmaterials kommen, wodurch es bei bildgebenden medizinischen Verfahren zu Artefakten (Bildfehlern) kommen kann. Weiterhin wird bei diesen Kunststoff-Beschichtungssystemen überwiegend Lösungsmittel, bspw. Methylethylketon, beigemischt. Das erfordert nicht nur zusätzliche Maßnahmen für Mitarbeiterschutz, sondern auch für Umweltschutz bspw. eine Absaugung mit Abluftreinigung.

Alternativ könnte der Formkörper des Lagerungskissens auch mit einem dichtenden Material umnäht werden. Nachteilig ist hier jedoch die Naht selbst, die in der Regel unkomfortabel und anfällig für Verschleiß ist. Die WO 2007/057278 A2 betrifft ein zur Ableitung von elektrischen Ladungen ausgebildetes Lagerungskissen mit einem Kissenkern aus geschäumtem Polyurethan. Das Lagerungskissen weist eine Außenhülle aus elektrisch leitfähigem Material auf, wobei eine Naht zur Verbindung von zugeordneten Randbereichen der Umhüllung ausgebildet ist. Die Umhüllung besteht weiter bevorzugt aus einem elektrisch leitfähigen Kunstleder. Die Kunstleder-Umhüllung ist innenwandig mit einer Polyethylen-Schaumschicht kaschiert.

Eine weitere Alternative ist das Formschäumen. Dabei wird das Material zur Herstellung des Formkörpers in eine Form geschäumt oder gefüllt, die zuvor mit dem Material für die kompakte und dichtende Hülle ausgelegt worden ist (IMC = Inmold Coat Verfahren). Nachteilig bei diesem Verfahren sind die hohen Kosten, insbesondere für geringe Stückzahlen herzustellender Lagerungskissen. Für jeden Formkörper muss eine eigene Form angefertigt werden. Weiterhin nachteilig ist die harte Kantenbildung der Hülle, was Lagerungsschäden oder Druckstellen am Patienten nach sich ziehen kann.

Im Stand der Technik sind daher verschiedene Verfahren bekannt, die Hüllen für Lagerungskissen mittels Tiefziehen herzustellen. Die WO 2010/141634 A1 betrifft ein Lagerungskissen zur Lagerung von Kopf, Schultern und Händen, bestehend aus einem Formkörper und einer Oberflächenschicht. Der Formkörper besteht aus einer äußeren Schicht und eine inneren Schicht, wobei die äußere Schicht ein weiteres Material, bspw. ein weicheres Polyethylen und die innere Schicht ein härteres Material, bspw. ein härteres Polyethylen umfasst. Die Oberflächenschicht wurde mittels Tiefziehen auf den Formkörper aufgezogen.

Die EP 2 946 760 A1 betrifft ein Lagerungskissen, bestehend aus einem Formkörper mit einer Oberfläche, die aus Seitenflächen, Oberseite und Unterseite gebildet wird. Ein Überzugelement aus thermoplastischem Material mit einer glatten, geschlossenzelligen Oberfläche ist als bügelartiges Spannelement ausgebildet und bedeckt zumindest einen Teil der Oberfläche des Formkörpers. Der Übergang der Oberseite zu den Seitenflächen des Formkörpers ist mit ausgeprägten Kanten ausgestaltet, damit das Überzugelement unter Spannung am Formkörper hält. Das Überzugelement kann aus Polyethylen bestehen und vor dem Verbinden mit dem Formkörper mittels Tiefziehens hergestellt werden.

Die DE 10 2006 046 537 A1 betrifft eine Kopfstütze auf Schaumstoffbasis zur Verwendung im medizinischen Bereich. Diese Kopfstütze besteht aus einem Hartschaumstoffkern auf Basis eines expandierten thermoplastischen Polyethylens. Der Hartschaumstoffkern ist vollflächig überzogen von einer Weichschaumstoffschicht und einer fluiddichtenden Außenhülle. Verfahrensmäßig ist vorgesehen, dass zumindest eine Kopfstützen-Außenhülle in einer Tiefziehform mit einer Weichschaumstoffschicht kaschiert und vorgeformt wird und dieser Verbund hiernach über den Hartschaumstoffkern gezogen wird. Die Randbereiche der Außenhülle werden miteinander verbunden, sodass auch hier eine unerwünschte Naht entsteht.

Vakuumtiefziehverfahren sind allgemein auch aus anderen technischen Gebieten, beispielsweise zur Herstellung von Formteilen, als Alternative zum Spritzguss bekannt. Hierbei wird ein Formteil durch Aufziehen eines thermoplastischen Kunststoffs auf bspw. ein poröses Aluminiumwerkzeug hergestellt. Der thermoplastische Kunststoff wird hierbei zunächst durch die Einwirkung von Druckluft aufgeblasen bzw. expandiert und anschließend durch Erzeugung eines Vakuums um das Werkzeug "gezogen". Nachteilig ist an diesem Verfahren, dass lediglich geöffnete Formteile herstellbar sind, weil das Werkzeug im Anschluss aus dem Formteil entfernt werden muss. US7849540 offenbart ein Lagerungskissen, das alle technischen Merkmale des Oberbegriffs von Anspruch 1 aufweist.

Es ist die Aufgabe der vorliegenden Erfindung, die Nachteile aus dem Stand der Technik zu eliminieren und ein medizinisches Lagerungskissen bereitzustellen, welches einfacher und kostengünstiger in der Herstellung ist, insbesondere die Funktionalität und den Patientenkomfort zu verbessern.

Die Aufgabe wird gelöst durch ein Lagerungskissen gemäß Anspruch 1 und ein Herstellungsverfahren gemäß Anspruch 8. Vorteilhafte Ausführungsformen sind in den Unteransprüchen beansprucht und werden nachfolgend näher erläutert.

Ein erfindungsgemäßes Lagerungskissen der eingangs näher beschriebenen Art kennzeichnet sich dadurch, dass eine von dem Teilbereich verschiedene, definierte Anlagewandung mit einer Bodenplatte aus einem fluiddichten Material verbunden ist, wobei innerhalb dieser Bodenplatte mindestens eine die Bodenplatte durchsetzende Ausnehmung ausgebildet ist.

Die Zuordnung "Boden" in dem Merkmal Bodenplatte heißt, dass diese Fläche oder Seite des Lagerungskissens während des Überziehens des Oberflächenmaterials bzgl. der Richtung der Schwerkraft unten ist. Die Ausrichtung der Bodenplatte bei der späteren Verwendung bspw. des Lagerungskissens kann davon verschieden sein. "Fluiddurchlässiges Material" beschreibt im Zusammenhang mit dieser Anmeldung eine offenporige, offenzellige oder allgemein poröse Struktur, die beim Ausschäumen des Formkörpermaterials entstehen kann. "Fluiddicht" im Sinne dieser Anmeldung bezeichnet ein gegenüber Flüssigkeiten undurchlässiges und ein gegenüber Gasen im Wesentlichen undurchlässiges Material, insbesondere ein geschlossenporiges, geschlossenzelliges oder nicht-poröses Material. Der fluiddurchlässige Formkörper ist im Bereich einer definierten Anlagewandung von einer fluiddichten Bodenplatte begrenzt und ein übriger Teilbereich, vorzugsweise der gesamte übrige Teilbereich von einem fluiddichten Oberflächenmaterial umzogen oder umhüllt. Um das Oberflächenmaterial in vollflächige Anlage mit dem Formkörper zu bringen, wird in dem fluiddurchlässigen Material des Formkörpers ein Vakuum oder allgemein ein Unterdruck erzeugt.

Um das Vakuum in dem fluiddurchlässigen Material durch die fluiddichte Bodenplatte hindurch bereitstellen und aufrechterhalten zu können, ist in der Bodenplatte eine Ausnehmung nötig. Sofern das Lagerungskissen anwendungsbedingt ohnehin eine ausreichend große Ausnehmung in der Bodenplatte aufweisen muss, bspw. bei Gesichtsauflagekissen, sind keine weiteren Maßnahmen notwendig. Sofern das Lagerungskissen anwendungsbedingt jedoch keine oder zumindest keine ausreichend große Ausnehmung aufweisen soll oder darf, so muss zur Erzeugung des Vakuums eine zweckmäßig große Ausnehmung in der Bodenplatte ausgebildet werden. Die Ausnehmung ermöglicht während der Herstellung einen Fluidaustausch zwischen fluiddurchlässigem Material des Formkörpers und der Umgebung durch die Bodenplatte. Eine künstlich erzeugte Ausnehmung mit einem Durchmesser von 13-15 mm ist ausreichend, um ein Vakuum in einem Formkörper mit einer 500 × 500 mm großen vollflächig geschlossenen Anlagefläche zu erzeugen. Bei größeren Lagerkissen können zusätzliche oder größere Ausnehmungen erforderlich sein. Nachdem das Oberflächenmaterial in vollflächige Anlage mit dem Formkörper gebracht worden ist, kann die Ausnehmung wieder verschlossen werden, damit der Formkörper zu allen Seiten für medizinische Anwendungen ausreichend abgedichtet ist. Ein solches Lagerungskissen ist daher vor dem Eindringen von Verunreinigungen geschützt, kann gut gereinigt oder desinfiziert werden und kann damit auch strenge gesetzliche Anforderungen und Hygienestandards einhalten, womit die Lagerungskissen sehr gut auch in Krankenhäusern eingesetzt werden können. Durch die vollflächige Anlage zwischen Oberflächenmaterial und Formkörper kann auch eine besonders gute Haptik erreicht und die Bequemlichkeit des Kissens verbessert werden.

In einer besonders bevorzugten Ausführungsform der Erfindung umfasst die Bodenplatte eine flächig an die definierte Anlagewandung des Formkörpers angrenzende erste Seite, eine von der ersten Seite abgewandte zweite Seite und mindestens eine Mantelfläche, wobei die Mantelfläche bündig an den Formkörper anschließt und mit dem Oberflächenmaterial umzogen oder überzogen ist.

Durch diese Maßnahme wird insbesondere die Langlebigkeit bspw. des Lagerungskissens verbessert. Verschleißanfällige Stoßstellen, bspw. zwischen dem Formkörper und der Mantelfläche der Bodenplatte und mögliche Fugen in dem Bereich werden durch das Oberflächenmaterial flächig bedeckt. Mit Ausnahme der der Umgebung zugewandten zweiten Seite der Bodenplatte bzw. der Standfläche des Lagerungskissens ist die Oberfläche bspw. des Lagerungskissens vollständig von dem fluiddichten Oberflächenmaterial bedeckt. Ein solches Lagerungskissen ist frei von Nähten, frei von aufgesprühten Materialansammlungen und damit strapazierfähig, verschleißarm und langlebig.

Vorzugsweise umfasst das Oberflächenmaterial ein EVA-Copolymer oder ist vollständig aus einem EVA-Copolymer gefertigt. Insbesondere kann das Oberflächenmaterial ein aufgeschäumter Schaumkunststoff mit Anteilen von EVA-Copolymer sein.

Gut geeignet ist bspw. ein EVA-Copolymer (Ethylen-Vinylacetat-Copolymer) mit anorganischen Füllstoffen und Pigmenten, insbesondere mit der Bezeichnung nora Lunatec motion. Ein Oberflächenmaterial mit EVA-Copolymer ist besonders gut geeignet, Scherkräfte aufzunehmen und weist gute Bettungs- und Dämpfungseigenschaften auf. Darüber hinaus ist es sehr gut zu verarbeiten. Das Oberflächenmaterial wird als thermoplastisch verformbare Platte oder Panel bereitgestellt und bei Temperaturen zwischen 75 und 130 °C verformbar gemacht und dann unter Spannung auf den Formkörper aufgezogen, wobei es Formkörpermaterial gegenüber der Umgebung abdichtet.

Die Bodenplatte umfasst vorzugsweise einen fluiddichten vernetzten Polyethylenschaum oder ist vollständig aus einem fluiddichten vernetzten Polyethylenschaum gefertigt. Die Bodenplatte umfasst insbesondere einen vernetzten Polyethylenschaumstoff mit Anteilen von EVA-Copolymer.

Die Bodenplatte wird bevorzugt aus einem Vollmaterial zugeschnitten und mit der Anlagewandung des Formkörpers verbunden, sodass die erste Seite der Bodenplatte und die Anlagewandung des Formkörpers miteinander zur Deckung gelangen. Gut geeignet für das Material der Bodenplatte ist bspw. ein geschlossenzelliger vernetzter Polyethylenschaum mit einer niedrigen Dichte, insbesondere mit der Bezeichnung Plastazote LD24. Auch die Bodenplatte kann kurzfristig Temperaturen von 75 °C ausgesetzt werden. Die Dichte der Bodenplatte beträgt typischerweise zwischen 20 und 65 kg/m³, vorzugsweise 24 kg/m³. Vernetztes Polyethylen entsteht allgemein durch einen Vernetzungsvorgang, wobei zwischen den Makromolekülen des Polyethylen (PE) feste Verbindungen bzw. Verknüpfungen hergestellt werden. Durch nachträgliche Vernetzung entsteht ein thermisch belastbarer, nicht schmelzender Werkstoff.

Vorteilhaft für ein medizinisches Lagerungskissen ist es, wenn der der Formkörper einen fluiddurchlässigen Polyurethanschaum umfasst oder vollständig aus einem fluiddurchlässigen Polyurethanschaum gefertigt.

Als besonders gut herausgestellt hat sich ein Polyurethanschaum auf Polyetherbasis mit der Typenbezeichnung CP 2865 von CT Formpolster GmbH oder auch mit der Typenbezeichnung RP28065 von Carpenter GmbH. Der Formkörper hat eine auf die vorab festgelegte Verwendung als Lagerungskissen für bestimmte Körperteile angepasste dreidimensionale Oberfläche und wird zum Zweck dieser Anpassung mit geeigneten spanabhebenden Verfahren aus einem Rohblock geschnitten.

Um das Herstellungsverfahren mittels Tiefziehen und Vakuum realisieren zu können, ist zweckmäßig, dass die Dichte des Formkörpers in einem Bereich zwischen 24 und 72 kg/m³ und die Stauchhärte des Formkörpers in einem Bereich zwischen 4,3 und 8,0 kPa, insbesondere zwischen 5,6 und 7,5 kPa, insbesondere 6,5 kPa, ist.

Ein Formkörper mit den vorgenannten Parametern hat sich für die Herstellung von Lagerungskissen mit einem Vakuum-Tiefziehverfahren als besonders gut geeignet herausgestellt. Das Material des Formkörpers muss eine ausreichende Rückstellkraft aufweisen, damit nach dem Aufheben des Vakuums in dem fluiddurchlässigen Formkörper der Formkörper seine zweckmäßige Kontur wieder einnimmt, sobald Luft einströmen kann. Die Stauchhärte sagt allgemein aus, wie viel Druck auf den Schaum einwirken muss, um ihn um 40% der Ausgangshöhe zusammenzudrücken. Die Stauchhärte wird in Kilopascal (kPa) angegeben. Je höher die Stauchhärte des Schaums ist, desto fester ist er. Auch das Formkörpermaterial ist vorzugsweise thermisch belastbar, sodass es sich während des Vakuumtiefziehverfahrens und dem Kontakt mit dem erwärmten Oberflächenmaterial nicht plastisch verformt. Für druckentlastende Lagerungen kann auch ein viskoelastischer Schaumkörper als Formkörper verwendet werden. Hierzu eignet sich bspw. der Typ 50/43 von Kabelwerk Eupen AG. Viskoelastische Schaumkörper umfassen Schäume mit einem Formgedächtnispolymer, bspw. auf Polyurethanbasis, wobei Additive einen Formgedächtniseffekt bereitstellen. Formgedächtniseffekt kann bspw. heißen, dass der Formkörper unter Einwirkung von Druck und Körpertemperatur beim Benutzen die Form verändert und seine ursprüngliche Kontur nicht oder nach Entlastung nur sehr langsam wieder einnimmt.

Um einen dauerhaften Verbund zwischen Formkörper, Bodenplatte und Oberflächenmaterial bereitzustellen, ist zwischen dem Oberflächenmaterial und dem Formkörper sowie zwischen dem Oberflächenmaterial und der Bodenplatte eine Haftvermittlerschicht angeordnet, insbesondere aufgesprüht.

Im Lagerungskissen sind vorzugsweise alle Seiten des Formkörpers und der Bodenplatte mit Ausnahme der zweiten Seite der Bodenplatte mit Haftvermittler benetzt. Als Haftvermittler kann insbesondere ein Sprühkleber verwendet werden. Sprühkleber können bspw. Mischungen aus Dichlormethan, gemischt mit Propan und/oder Butan sein. Als gut geeignet gezeigt hat sich ein Sprühkleber der Bezeichnung Palty Spray Adhesive 500ML.

Auch die Herstellung größerer Lagerungskissen mit einem Vakuum-Tiefziehverfahren ist möglich, wenn die Ausnehmung mittels eines Verschlusskörpers verschlossen ist, wobei der Verschlusskörper aus fluiddichtendem Material und/oder einen Ringspalt bildend ausgebildet ist.

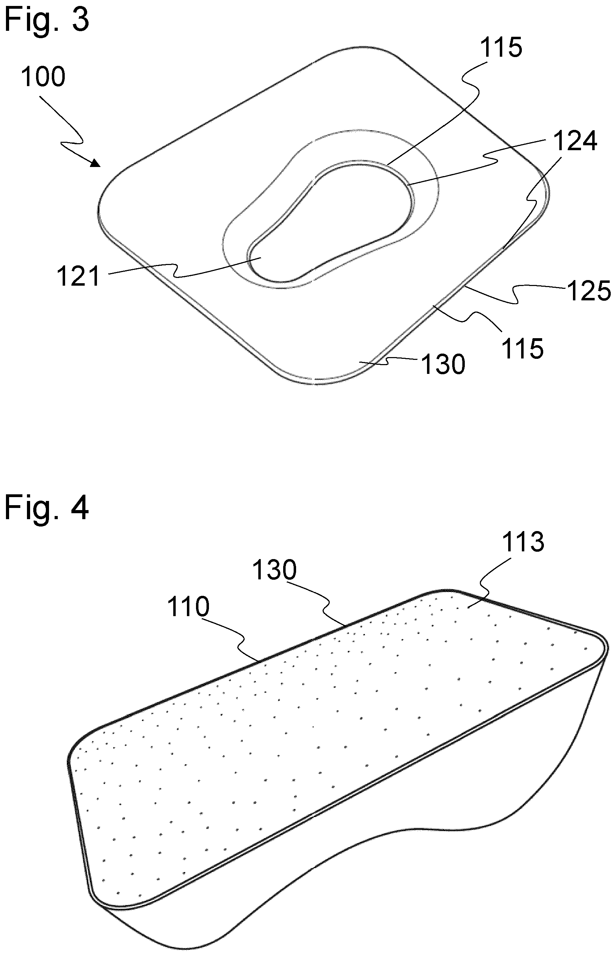

Durch den Verschluss ist die Ausnehmung verschlossen und der Formkörper kann von der Umgebung getrennt werden. Ein Verschluss ist notwendig, wenn im fertigen Lagerungskissen keine natürliche Ausnehmung (wie etwa in der Figur 3) vorgesehen ist und daher eine künstliche Ausnehmung ausgebildet werden muss. Der Verschluss kann derart fluiddicht ausgebildet sein, dass er ein Eindringen von Flüssigkeiten und sonstigen Verunreinigungen in den Formkörper verhindern kann. Der Verschluss kann jedoch eine Luftdurchlässigkeit aufweisen. Luftdurchlässig heißt, dass der Formkörper bei Belastung komprimieren bzw. stauchen kann und die Luft bzw. die Gase aus dem porösen fluiddurchlässigen Material im Bereich des Verschlusses aus dem Lagerungskissen entweichen können. Wird die Belastung des Formkörpers aufgehoben, bewirkt die Rückstellkraft des Materials des Formkörpers die Expansion des Formkörpers, sodass sich das poröse fluiddurchlässige Material wieder mit Luft füllt, die im Bereich des Verschlusses einströmt. Der Bereich des Verschlusses wirkt als eine Art Ausgleichsventil, um eine Verformung des Lagerungskissens durch die ansonsten fluiddichten Bestandteile (Bodenplatte, Oberflächenmaterial) durch Luftströmung zu kompensieren. Es sind grundsätzlich verschiedene Verschlussvarianten denkbar. Vorzugsweise wird in der Bodenplatte eine durchsetzende Ausnehmung erzeugt und das dabei herausgeschnittene Stück oder ein gleiches Stück mit entsprechender Geometrie nach der Aufhebung des Vakuums als Verschlusskörper im Formkörper eingesetzt. Vorzugsweise ist beispielsweise der Durchmesser des Verschlusskörpers 1/10 mm kleiner gefertigt als der Durchmesser der Ausnehmung, sodass ein Spalt oder Ringspalt um den Verschlusskörper herum für Luftströmung frei bleibt. Zwecks Befestigung weist eine Stirnseite des Verschlusskörpers einen Klebepunkt auf, um den Verschlusskörper mit dem Formkörper zu verkleben. Prinzipiell könnte das Ausgleichsventil auch realisiert sein, in dem der Verschlusskörper aus einem zweckmäßig luftdurchlässigen Membranmaterial gebildet ist.

Die eingangs genannte Erfindungsaufgabe wird ebenfalls gelöst durch ein Verfahren zur Herstellung eines Lagerungskissens, umfassend folgende Schritte:
- Herstellen oder Bereitstellen eines Formkörpers aus einem fluiddurchlässigen Material und mit einer definierten, insbesondere flächigen, Anlagewandung,
- Herstellen oder Bereitstellen einer Bodenplatte aus einem fluiddichten Material mit mindestens einer die Bodenplatte durchsetzenden Ausnehmung,
- Verbinden der Bodenplatte mit der Anlagewandung des Formkörpers, sodass eine erste Seite der Bodenplatte flächig an der Anlagewandung des Formkörpers anliegt,
- Herstellen oder Bereitstellen eines fluiddichten, thermoplastisch verformbaren Oberflächenmaterials und Versehen des Formkörpers mit dem Oberflächenmaterial mittels eines Vakuumtiefziehverfahrens, wobei das Oberflächenmaterial unter Temperatureinwirkung und, insbesondere mittels Druckluft, verformt, insbesondere expandiert und anschließend durch Erzeugen eines Vakuums der Formkörper mit dem Oberflächenmaterial überzogen wird, wobei das Vakuum in dem Formkörper die Ausnehmung der Bodenplatte und das fluiddurchlässige Material des Formkörpers durchströmend erzeugt wird.

Gegenüber den aus dem Stand der Technik bekannten Vakuumtiefziehverfahren wird also das Werkzeug durch einen das Lagerungskissen bildenden Formkörper ersetzt und muss folglich nicht aus dem Oberflächenmaterial entfernt werden. Der Formkörper wird vorzugsweise bereitgestellt, indem er mittels Wasserstrahlverfahren oder sonstigen Frästechniken in der gewünschten Geometrie aus einem Rohmaterial oder Blockmaterial mit fluiddurchlässigem Material herausgeschnitten wird, wobei die Daten für die Geometrie mittels CAD bereitgestellt werden. Vorgesehen ist insbesondere ein Formkörper mit einer definierten flächigen und ebenen Anlagewandung zur Anlage mit der Bodenplatte. Ebenso wird die Bodenplatte in der gewünschten Geometrie aus einem Blockmaterial mit einem fluiddichten Material herausgetrennt. Ist in der Bodenplatte keine funktionsbedingte Ausnehmung vorhanden, so muss bspw. durch Bohren eine künstliche Ausnehmung in der Bodenplatte erzeugt werden. Die Bodenplatte weist eine im Verbundkörper der Umgebung zugewandte zweite Seite und eine dazu vorzugsweise kongruente erste Seite auf, wobei die definierte erste Seite der Bodenplatte kongruent zu der definierten Anlagewandung des Formkörpers ist und dadurch bündig angelegt werden kann.

Die Anlagewandung und die erste Seite wird unter Anwendung von Haftvermittler zur Ausbildung des Verbundkörpers miteinander verbunden. Die Bodenplatte ist vorzugsweise auf die definierte Anlagewandung des Formkörpers aufgeklebt. Der so bereitgestellte Verbundkörper wird mit der zweiten Seite der Bodenplatte auf eine Tiefziehmaschine aufgelegt oder im Bereich der Bodenplatte in einer Halterung in einer Tiefziehmaschine eingespannt. Oberhalb des Verbundkörpers wird ein vorzugsweise 2-3 mm dickes Panel mit dem Material der noch auszubildenden Oberflächenschicht angeordnet. Der Verbundkörper ist derart in der Tiefziehmaschine ausgerichtet, dass sich der Formkörper zwischen Oberflächenmaterial und Bodenplatte befindet. Ferner ist auf die freie Oberfläche des Formkörpers oder wenigstens den Teilbereich der freien Oberfläche des Formkörpers Haftvermittler aufgetragen, ebenso wie auf die Mantelfläche der Bodenplatte.

Durch Anwendung von Druckluft und Temperaturerhöhung wird das Panel des thermoplastisch verformbaren Oberflächenmaterials derart verformt bzw. verformbar gemacht, dass das Oberflächenmaterial im Rahmen eines Tiefziehvorgangs durch den Formkörper verformt und mit Anwendung von Unterdruck in dem Formkörpermaterial zur vollflächigen Anlage mit der freien Oberfläche des Formkörpers gelangt. Separate Tiefziehformkörper können entfallen, ebenso wie nachträgliche Montageschritte zum Verbinden von verformtem Obermaterial und Formkörper. Der auch als Vakuum bezeichnete Unterdruck wird durch eine Vakuumpumpe bzw. einen Vakuumverdichter erzeugt, der durch die Ausnehmung der Bodenplatte die Erzeugung des Vakuums im fluiddurchlässigen Material ermöglicht und während des Überziehens des Oberflächenmaterials aufrecht erhält. Eine mögliche und vorteilhafte Ausführungsform zur Durchführung des erfindungsgemäßen Tiefziehverfahrens ist die Bodenstandmaschine Formech 686 Vakuum-Tiefziehmaschine.

Nach der Bereitstellung des Oberflächenmaterials, vorzugsweise als Panel, wird bei der Temperatureinwirkung das Oberflächenmaterial vorzugsweise auf eine Temperatur zwischen 75°C und 130°C erwärmt. Die Erhitzung erfolgt bspw. über eine Heizleistung, die über einen vorab festgelegten Zeitraum aufrecht erhalten wird.

Nach der Bereitstellung des Oberflächenmaterials wird das Oberflächenmaterial mittels Druckluft zur Ausbildung eines Hohlraums zur Aufnahme des Verbundkörpers expandiert, sodass es die Form einer nach unten offenen Kuppel aufweist. Das Oberflächenmaterial wurde dabei vor der Expansion erwärmt, sodass es thermoplastisch verformbar ist. Der Vorgang des Ausbildens eines halbkugelförmigen oder kuppelförmigen Hohlraums mittels Druckluft kann auch allgemein als Vordehnen oder Vorblasen bezeichnet werden. Dadurch wird das Oberflächenmaterial ausreichend verformbar bereitgestellt, um eine vollflächige Anlage zwischen Oberflächenmaterial und Formkörper auch bei einem komplexen Oberflächenprofil des Formkörpers zu gewährleisten.

Bevorzugt wird der Formkörper oder Verbundkörper während und/oder nach der Erzeugung von Vakuum in dem fluiddurchlässigen Material in den oder in Richtung des Oberflächenmaterials bewegt.

In anderen Worten, es erfolgt eine Relativbewegung zwischen Formkörper und Oberflächenmaterial. Formkörper für medizinische Lagerungskissen bestehen in der Regel aus einem Bereich mit einem komplexen Oberflächenprofil, um ein komplementär ausgebildetes Körperteil zu lagern. Ferner bestehen sie aus einem Bereich mit seitlichen eher ebeneren Wandungen. Sobald das Oberflächenmaterial mit dem komplexen Oberflächenprofil zur vollflächigen Anlage gelangt ist, wird der Bereich der seitlichen Wandungen, einschließlich der Mantelfläche der Bodenplatte mit dem Oberflächenmaterial umzogen. Dabei wird der Formkörper aufwärts bewegt, während das Oberflächenmaterial durch das zuvor eingespannte Panel seitlich eingespannt bleibt. Durch die Bewegung des Formkörpers bzw. Verbundkörpers verformt sich das Oberflächenmaterial weiter und legt sich vollflächig durch Absaugen (Vakuum) an die mit Haftvermittler benetzten Seitenwandungen bzw. die Mantelflächen der Bodenplatten an.

Falls in der Bodenplatte eine Ausnehmung künstlich geschaffen worden ist, so kann diese wieder verschlossen werden, um ein Eindringen von Flüssigkeit oder Verunreinigung in den Formkörper durch die Ausnehmung der Bodenplatte zu verhindern. Durch das System der verschließbaren Ausnehmung ist das erfindungsgemäße Verfahren auch für Lagerungskissen anwendbar, die keine funktionsbedingte Ausnehmung aufweisen.

In einer besonders vorteilhaften Ausführungsform der Erfindung erfolgt nach dem Beenden des Erzeugens von Vakuum ein Abtrennen einer Scheibe der Bodenplatte zum Erzeugen einer Standfläche des Lagerungskissens.

Zusammen mit der Scheibe der Bodenplatte wird der Verschnitt des Oberflächenmaterials, insbesondere nach dem Abkühlen, abgetrennt. Verschnitt ist im Wesentlichen der Teil des Oberflächenmaterials aus dem ursprünglich verwendeten Panel, der nicht mit dem Verbundkörper zur Anlage gelangt ist. Gegebenenfalls abgetrennt wird zusammen mit der Bodenplatte ein Teil des Verschlusskörpers. Im fertigen Lagerungskissen bildet die durch die Schnittfläche bereitgestellte zweite Seite der Bodenplatte zusammen mit der zweiten Seite des Verschlusskörpers und der Schnittkante des Oberflächenmaterials eine fluchtende ebene Wandung, die vorzugsweise die Standfläche des Lagerungskissens bildet.

Weitere Einzelheiten, Merkmale, Merkmals(unter)kombinationen, Vorteile und Wirkungen auf Basis der Erfindung ergeben sich aus der nachfolgenden Beschreibung eines bevorzugten Ausführungsbeispiels *{bzw. -beispiele}* der Erfindung und den Zeichnungen. Diese zeigen in
- Fig. 1: eine schematische Schnittdarstellung einer ersten beispielhaften Ausführungsform der Erfindung,
- Fig. 2: eine perspektivische Darstellung der ersten beispielhaften Ausführungsform gemäß Figur 1,
- Fig. 3: eine perspektivische Darstellung einer zweiten beispielhaften Ausführungsform der Erfindung,
- Fig. 4: eine perspektivische Darstellung der aufgeschnittenen ersten beispielhaften Ausführungsform gemäß Figur 1,
- Fig. 5: einen ersten beispielhaften erfindungsgemäßen Verfahrensschritt in perspektivischer Darstellung,
- Fig. 6: einen zweiten oder weiteren beispielhaften erfindungsgemäßen Verfahrensschritt in perspektivischer Darstellung,
- Fig. 7: einen dritten oder weiteren beispielhaften erfindungsgemäßen Verfahrensschritt in perspektivischer Darstellung,
- Fig. 8: einen vierten oder weiteren beispielhaften erfindungsgemäßen Verfahrensschritt in perspektivischer Darstellung und
- Fig.9: ein Ablaufdiagramm für einen beispielhaften erfindungsgemäßen Verfahrensablauf.

Die Figuren sind lediglich beispielhafter Natur und dienen nur dem Verständnis der Erfindung. Die gleichen Elemente sind mit denselben Bezugszeichen versehen.

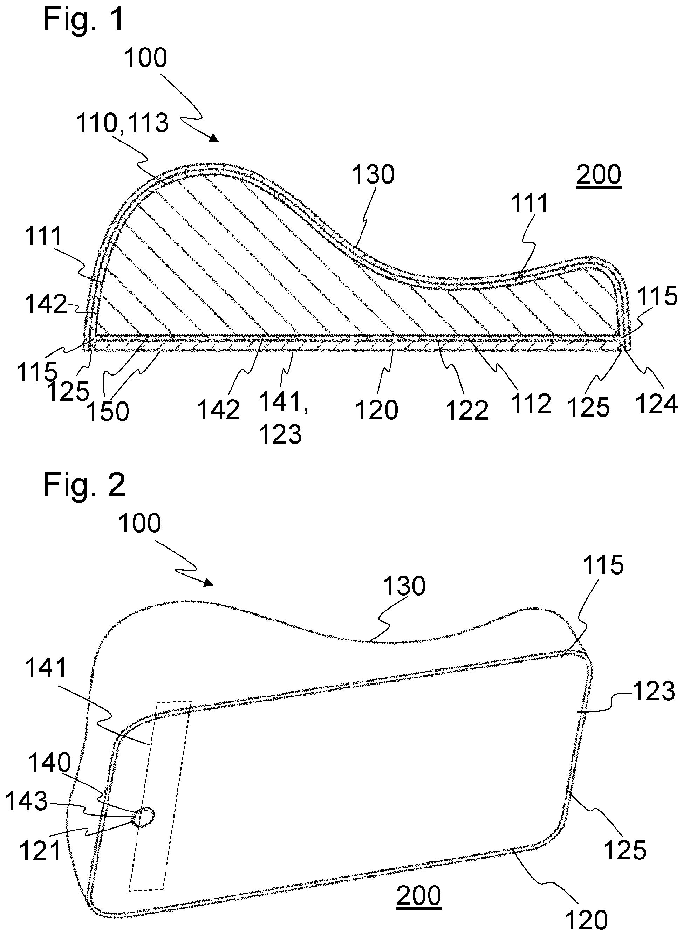

Figur 1 zeigt eine erste beispielhafte Ausführungsform eines erfindungsgemäßen Lagerungskissens 100. Das Lagerungskissen 100 weist einen Formkörper 110, eine Bodenplatte 120 und Oberflächenmaterial 130 auf. Der Formkörper 110 und die Bodenplatte 120 bilden einen Verbundkörper 150, wobei zwischen dem Formkörper 110 und der Bodenplatte 120 eine Schicht mit Haftvermittler 142 angeordnet ist. Die äußere Geometrie des Formkörpers 110, insbesondere dessen Teilbereich 111, ist an die spätere Verwendung als Lagerungskissen 100 individuell angepasst oder anpassbar. Als Teilbereich 111 wird in der Regel die Oberfläche des Formkörpers 110 bezeichnet, die nicht mit der Auflagewandung 122 der Bodenplatte 120 verbunden oder von ihr bedeckt ist. Der Teilbereich 111 kann daher auch als Kontaktwandung für den Kontakt mit dem Oberflächenmaterial 130 bezeichnet werden. An den Kontaktwandungen 111, 124 zwischen dem Formkörper 110 und dem Oberflächenmaterial 130 bzw. der Bodenplatte 120 und dem Oberflächenmaterial 130 ist ebenfalls eine Schicht mit Haftvermittler 142 angeordnet.

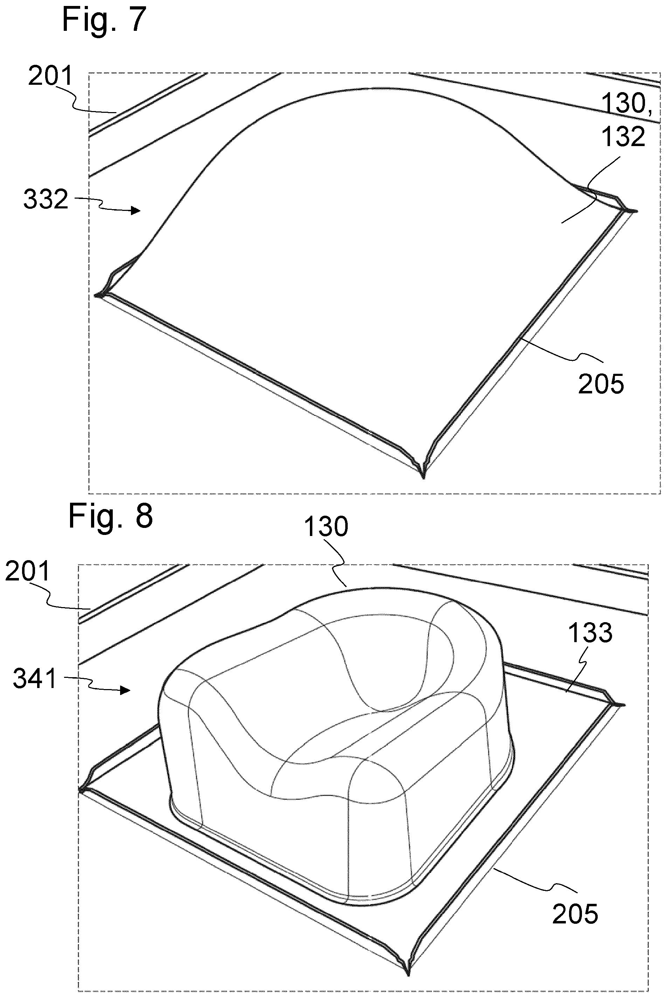

Die Bodenplatte 120 wird vorzugsweise aus einem Vollmaterial zugeschnitten und mit der Anlagewandung 112 des Formkörpers 110 verbunden, sodass die erste Seite 122 der Bodenplatte 120 und die Anlagewandung 112 des Formkörpers 110 miteinander zur Deckung gelangen. Dadurch fluchtet die Stoßstelle 115 zwischen Formkörper 110 und der Mantelfläche 124 der Bodenplatte 120. Kanten, Zwischenräume und Vorsprünge im Bereich der Stoßstelle 115 werden dadurch vermieden. Die verbleibende Fuge der Stoßstelle 115 wird durch das Oberflächenmaterial 130 flächig bedeckt. Nachdem das Oberflächenmaterial 130 vollständig auf den Verbundkörper 150 aufgezogen ist, wird das nicht genutzte Oberflächenmaterial 130, also der Verschnitt 133 (siehe Figur 8) abgetrennt, indem (nicht dargestellt) eine Scheibe der Bodenplatte 120 zusammen mit dem Verschnitt 113 des Oberflächenmaterials 130 abgetrennt und die zweite Seite 123 der Bodenplatte 120 im fertigen Lagerungskissen 100 durch eine Schnittfläche als Standfläche 141 (vgl. Figur 2) gebildet wird.

Geschnitten wird durch die Bodenplatte 120, das Obermaterial 130 und gegebenenfalls zusätzlich den Verschluss 140, sodass eine Standfläche 141 entsteht, die durch das gestrichelte Rechteck in Figur 2 angedeutet ist. Figur 2 zeigt ferner grundsätzlich ein fertiges Lagerungskissen 100, bei dem der Formkörper 110 (verdeckt) vollständig vom Oberflächenmaterial 130, der Bodenplatte 120 und dem Verschluss 140 gegenüber der Umgebung 200 abgegrenzt ist, sodass keine Flüssigkeiten oder sonstigen Verunreinigungen an oder in den Formkörper 110 gelangen können. Das Oberflächenmaterial 130 ist im Bereich der Mantelfläche 124 (siehe Figur 1) der Bodenplatte 120 verklebt, sodass der Bereich der Stoßstelle 125 zwischen Bodenplatte 120 und Oberflächenmaterial 130 im Wesentlichen fluiddicht ist. Auch der Verschlusskörper 140 verschließt die, während dem Vakuumtiefziehen benötigte, Ausnehmung 121, sodass der Bereich des Verschlusses 140 einen Ringspalt 143 aufweist und als Luftventil für Luftausgleich im Lagerungskissen 100 verwendet werden kann. Im Übrigen sind das Oberflächenmaterial 130 und die Bodenplatte 120 aus fluiddichtem Material ausgebildet.

Figur 3 zeigt ein allgemein als Gesichtsauflage- oder Bauchlagekissen bezeichnetes Lagerungskissen 100, welches insbesondere für Massageliegen Anwendung findet. Funktionsbedingt weist ein solches Lagerungskissen 100 eine Ausnehmung 121 auf, sodass auf die Erzeugung einer künstlichen Ausnehmung (siehe Figur 2) verzichtet werden kann. Die funktionsbedingte Ausnehmung kann ein ausreichendes Vakuum für die Vakuumtiefziehtechnik in dem fluiddurchlässigen Material 113 (siehe Figur 4) bereitstellen. Auch dieses Lagerungskissen 100 umfasst ein Oberflächenmaterial 130, welches um einen Verbundkörper 150 (verdeckt) umzogen ist bzw. diesen umhüllt. 115 kennzeichnen vom Oberflächenmaterial 130 abgedeckte Stoßstellen 115 als Übergang von dem vollständig bedeckten Teilbereich 111 des Formkissens 110 und einer ebenfalls vollständig verdeckten inneren Mantelfläche 124 der Bodenplatte 120, wobei die innere Mantelfläche 124 die Ausnehmung 121 begrenzt. Dasselbe gilt für die Stoßstelle 115 mit der äußeren Mantelfläche 124.

Zur weiteren Veranschaulichung zeigt Figur 4 ein aufgeschnittenes Lagerungskissen 100, sodass das fluiddurchlässige Material 113 des aufgeschnittenen Formkörpers 110 zu sehen ist, welches durch das ebenfalls aufgeschnittene Oberflächenmaterial 130 begrenzt ist.

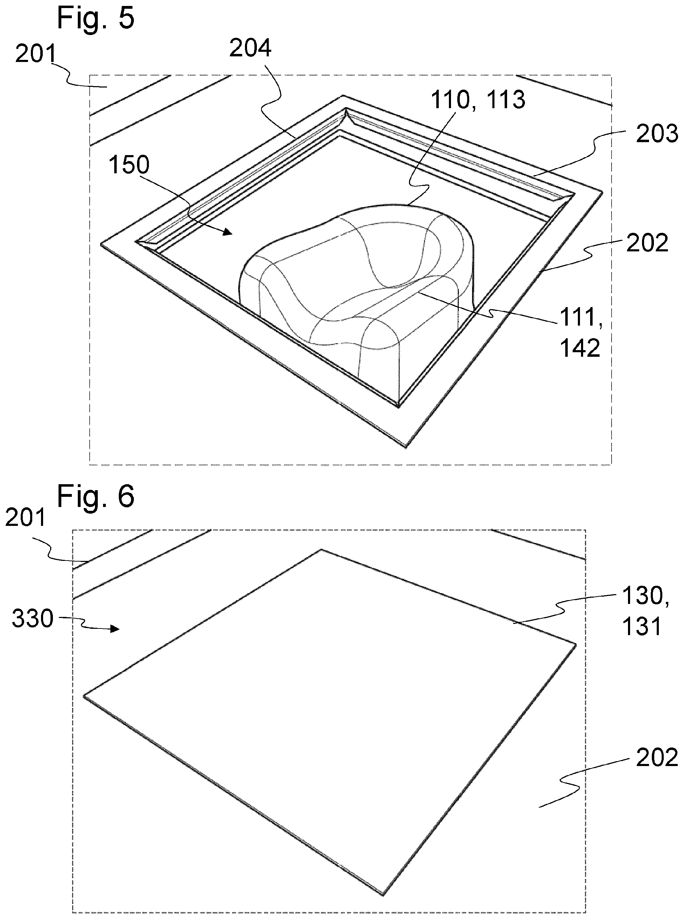

Figur 5 zeigt einen Bereich einer als Bodenstandmaschine ausgebildeten Formech 686 Vakuum-Tiefziehmaschine 201. Diese weist eine als Schacht 203 ausgebildete Vertiefung auf, wobei an dem oberen Ende des Schacht 203 eine Auflage 202 angeordnet ist, welche die Öffnung 204 des Schachtes 203 umgibt. In dem Schacht 203 ist unterhalb der Öffnung 204 der an den erforderlichen Stellen mit Haftvermittler 142 umsprühte Verbundkörper 150 vertieft angeordnet.

Durch die vertiefte Anordnung des Verbundkörpers 150 im Schacht 203 kann oberhalb des Verbundkörpers 150 das Panel 131 für das Oberflächenmaterial 130 auf der Auflage 202 abgelegt werden.

Figur 6 zeigt eine Platte bzw. ein Panel 131 aus einem noch nicht verformten Oberflächenmaterial 130, wobei das Panel 131 auf der Auflage 202 abgelegt ist und die Öffnung 204 des Schachtes 203 vollständig bedeckt. Das verwendete Oberflächenmaterial mit dem EVA-Copolymer hat vorzugsweise die Materialbasis EVA-Leichtzell, eine Shore A-Härte von 12 und eine Dichte von 0,13 g/cm³. Die Dicke der Platte kann bspw. 2, 3, 4, 6 oder 8 mm betragen. Im nächsten Schritt wird das Panel 131 zwischen der Auflage 202 und einem Rahmen oder Reduzierfenster 205 in den Randbereichen des Panels 131 eingespannt, während der über der Öffnung 204 des Schachtes 203 angeordnete Bereich des Panels 131 an seinen beiden Seitenwandungen zugänglich bleibt. Durch das Einspannen ist der Schacht 203 im Bereich der Öffnung 204 abgedichtet, sodass Überdruck mittels Druckluft und ein Vakuum in dem Schacht 203 bereitgestellt und aufrecht erhalten werden können. Anschließend wird das Panel 131 auf Temperaturen bspw. zwischen 75 und 130 °C erwärmt, indem oberhalb des Panels 131 ein Heiztablett (nicht dargestellt) als Heizstrahler angeordnet wird.

Durch das Erwärmen wird das Panel 131 thermoplastisch verformbar, sodass es, wie in Figur 7 dargestellt, mit Druckluft, bspw. mit erhitzter Druckluft, vorgeblasen werden kann. Dabei wird durch ein geeignetes Gebläse (nicht dargestellt) unterhalb des Panels 131 Druckluft eingeblasen, bspw. mittels seitlich im Schacht 203 angeordneten Düsen. Da das Material des Panels 131 fluiddicht und fluiddicht eingespannt ist, expandiert das Panel 131 infolge des Überdrucks und bildet dabei die Form einer Kuppel 132. Das Material wird quasi vorgedehnt oder vorgeblasen, um es ausreichend verformbar für eine Anlage an den Formkörper 110 (vgl. Figur 5) bereitzustellen. Unterhalb bzw. in der Kuppel 132 bildet sich ein kuppelförmiger bzw. halbkugelförmiger Hohlraum. Dabei wird Oberflächenmaterial 130 in den Randbereichen des Panels 131 fluiddichtend eingespannt. In diesen Hohlraum wird nun (verdeckt) der Verbundkörper aus Formkörper 110 und Bodenplatte 120 ganz oder wenigstens teilweise eingefahren, sodass zumindest der Formkörper 110 zumindest teilweise innerhalb des durch die Kuppel 132 vorgedehnten Oberflächenmaterials 130 begrenzten Hohlraums angeordnet ist.

Wie anschließend in Figur 8 gezeigt, wird das Vorblasen beendet, sobald der Formkörper 110 des Verbundkörpers 150 in dem durch die Kuppel 132 definierten Hohlraum eingefahren ist. Stattdessen wird mithilfe einer nicht dargestellten Vakuumpumpe bzw. einer sonstigen Vakuum bereitstellenden Einrichtung ein Vakuum in dem Hohlraum unter der Kuppel erzeugt, bspw. über eine zentral im Schacht 203 angeordnete Düse. Durch die Ausnehmung 121 in der Bodenplatte 120 (siehe bspw. Figuren 2 und 3) entsteht dabei ein Vakuum innerhalb des fluiddurchlässigen Materials 113 (siehe bspw. Figur 4), sodass sich das bereits thermoplastisch verformte und weiter verformbare Oberflächenmaterial 130 vollflächig an die dreidimensionale Oberfläche, insbesondere den Teilbereich 111, anlegt. Während der Erzeugung von Vakuum in dem fluiddurchlässigen Material 113 wird der Verbundkörper 150 schrittweise oder kontinuierlich weiter aufwärts bewegt, sodass sich das erwärmte und verformbare Oberflächenmaterial 130 an die Oberfläche 111 des Formkörpers 110 und die Mantelfläche 124 bzw. Mantelflächen (vgl. Figur 3) der Bodenplatte 120 anlegt. Der Verbundkörper 150 wird weiter aufwärts bewegt, bis die Mantelfläche 124 bis zur zweiten Seite 123 der Bodenplatte 120 bedeckt ist. Dabei wird das noch nicht in Anlage gebrachte Oberflächenmaterial des Panels 131 weiter kontinuierlich gedehnt und zur vollflächigen Anlage mit dem Verbundkörper 150 gebracht. Mit einer Textilschere wird das so erzeugte Zwischenprodukt grob freigeschnitten und das Reduzierfenster 205 entfernt. Der verbleibende Verschnitt 133 wird abgetrennt, in dem (nicht dargestellt) parallel zu der ersten Seite 122 und/oder der zweiten Seite 123 eine Scheibe der Bodenplatte 120 abgetrennt wird. Vor diesem Abtrennen erfolgt ein Abkühlen der Anordnung.

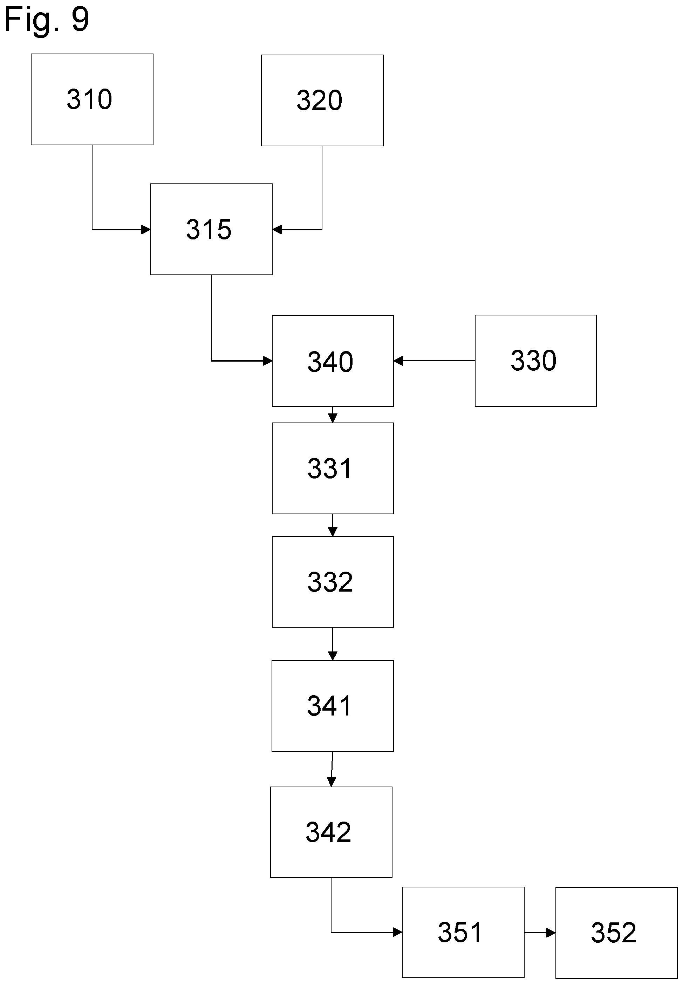

Figur 9 zeigt ein Ablaufdiagramm für einen beispielhaften zeitlichen Ablauf eines Herstellungsverfahrens zur Herstellung eines Lagerungskissens 100 gemäß der Figuren 1 oder 2. Zunächst erfolgt das Bereitstellen 310 eines Formkörpers 110 aus einem fluiddurchlässigen Material 113 zusammen mit dem Bereitstellen 320 einer Bodenplatte 120 aus einem fluiddichten Material mit mindestens einer die Bodenplatte 120 durchsetzenden Ausnehmung 121. In einem weiteren Schritterfolgt ein Verbinden 315 der Bodenplatte 120 mit der Anlagewandung 112 des Formkörpers 110, vorzugsweise unter Aufbringen einer Haftvermittlerschicht, sodass eine erste Seite 122 der Bodenplatte 120 flächig an der Anlagewandung 112 des Formkörpers 110 anliegt. Nachdem ggf. auf die Teilfläche 111 und die Mantelflächen 124 der Bodenplatte 120 eine Haftvermittlerschicht 142 aufgesprüht ist (nicht dargestellt), erfolgt das Bereitstellen 330 eines fluiddichten, thermoplastisch verformbaren Oberflächenmaterials 130 und Versehen des Formkörpers 110 mit dem Oberflächenmaterial 330 mittels eines Vakuumtiefziehverfahrens 340. Dabei wird das Oberflächenmaterial 130, vorzugsweise in die Tiefziehmaschine 201 eingespannt, und unter Temperatureinwirkung 331 zwischen 75°C und 130°C und zeitgleich und/oder nacheinander anwendend mittels Druckluft thermoplastisch expandiert 332 und anschließend durch Erzeugen 341 eines Vakuums der Formkörper 110 mit dem Oberflächenmaterial 130 überzogen. Dabei wird das Vakuum in dem Formkörper 110 erzeugt und während des Überziehens aufrechterhalten, indem die Ausnehmung 121 der Bodenplatte 120 und das fluiddurchlässige Material 113 des Formkörpers 110 durchströmt wird. Während und/oder nach dem Erzeugen 341 von Vakuum in dem fluiddurchlässigen Material 113 wird der Formkörper 110 in Richtung des Oberflächenmaterials 130 bewegt. Sobald das Oberflächenmaterial 130 vollständig an der Oberfläche 111 und der Mantelfläche 124 anliegt, kann ein Abkühlungsschritt 342 durchgeführt werden. Sobald das Erzeugen 341 von Unterdruck beendet wird, strömt Luft durch die Ausnehmung 121 in den Formkörper 110 ein, sodass die der Formkörper 110 wieder entspannt und in die ursprünglich Form zurück kehrt. Schließlich wird Lagerungskissen 100 von der Tiefziehmaschine 201 getrennt, beispielsweise mit einer Textilschere. Falls eine künstliche Ausnehmung 201 erzeugt worden ist, erfolgt nach dem Beenden des Erzeugens 341 von Vakuum ein Verschließen 351 der Ausnehmung 121 durch einen Verschlusskörper 140. Schließlich erfolgt nach ein Abtrennen 352 einer Scheibe der Bodenplatte 120 zum Erzeugen einer Standfläche 141 des Lagerungskissens 100 (vgl. Figur 2) mit einem vertikalen Bandmesser.

### Bezugszeichenliste

- 100: Lagerungskissen
- 110: Formkörper
- 111: Teilbereich der Oberfläche, insbesondere Kontaktwandung mit Obermaterial
- 112: definierte Anlagewandung des Formkörpers
- 113: fluiddurchlässiges Material
- 115: Stoßstelle zwischen Formkörper und Bodenplatte
- 120: Bodenplatte
- 121: Ausnehmung
- 122: erste Seite der Bodenplatte
- 123: zweite Seite der Bodenplatte
- 124: Mantelfläche der Bodenplatte
- 125: Stoßstelle zwischen Oberflächenmaterial und Bodenplatte
- 130: Oberflächenmaterial
- 131: Panel, nicht verformtes Oberflächenmaterial
- 132: Kuppel mit Hohlraum
- 133: Verschnitt
- 140: Verschlusskörper
- 141: Standfläche, Schnittfläche
- 142: Haftvermittler, Haftvermittlerschicht
- 143: Ringspalt
- 150: Verbundkörper
- 200: Umgebung
- 201: Tiefziehmaschine
- 202: Auflage
- 203: Schacht
- 204: Öffnung des Schachtes
- 205: Reduzierfenster
- 310: Herstellen oder Bereitstellen eines Formkörpers
- 315: Verbinden von Bodenplatte und Formkörper
- 320: Herstellen oder Bereitstellen einer Bodenplatte
- 330: Herstellen oder Bereitstellen eines Oberflächenmaterials
- 331: Temperatureinwirkung
- 332: Expansion
- 340: Vakuumtiefziehen
- 341: Erzeugung von Vakuum
- 342: Abkühlen
- 351: Verschließen der Ausnehmung
- 352: Abtrennen der Scheibe

## Patentansprüche

1. Lagerungskissen (100) zur Lagerung von Körperteilen, insbesondere zur Verwendung im medizinischen Bereich, aufweisend einen vollständig oder teilweise aus einem fluiddurchlässigen Material (113) gefertigten Formkörper (110), welcher Formkörper (110) in einem Teilbereich (111) seiner Oberfläche mit einem fluiddichten, vollflächig an dem Formkörper (110) anliegenden Oberflächenmaterial (130) umzogen ist,
**dadurch gekennzeichnet, dass**
eine von dem Teilbereich (111) verschiedene, definierte Anlagewandung (112) mit einer vom Oberflächenmaterial (130) separat hergestellten Bodenplatte (120) aus einem fluiddichten Material verbunden ist, wobei innerhalb dieser Bodenplatte (120) mindestens eine die Bodenplatte (120) durchsetzende Ausnehmung (121) ausgebildet ist.

2. Lagerungskissen (100) nach Anspruch 1,
**dadurch gekennzeichnet, dass**
die Bodenplatte (120) eine flächig an die Anlagewandung (112) des Formkörpers (110) angrenzende erste Seite (122), eine von der ersten Seite (122) abgewandte zweite Seite (123) und mindestens eine Mantelfläche (124) umfasst, wobei die Mantelfläche (124) bündig an den Formkörper (110) anschließt und mit dem Oberflächenmaterial (130) überzogen ist.

3. Lagerungskissen (100) nach einem der vorhergehenden Ansprüche,
**dadurch gekennzeichnet, dass**
das Oberflächenmaterial (130) ein EVA-Copolymer umfasst oder vollständig aus einem EVA-Copolymer gefertigt ist.

4. Lagerungskissen (100) nach einem der vorhergehenden Ansprüche,
**dadurch gekennzeichnet, dass**
die Bodenplatte (120) einen fluiddichten vernetzten Polyethylenschaum umfasst oder vollständig aus einem fluiddichten vernetzten Polyethylenschaum gefertigt ist.

5. Lagerungskissen (100) nach einem der vorhergehenden Ansprüche,
**dadurch gekennzeichnet, dass**
der Formkörper (110) einen fluiddurchlässigen Schaum umfasst oder vollständig aus einem fluiddurchlässigen Schaum gefertigt ist und die Dichte des Formkörpers (110) in einem Bereich zwischen 24 und 72 kg/m³ und die Stauchhärte des Formkörpers (110) in einem Bereich zwischen 4,3 und 8,0 kPa liegt.

6. Lagerungskissen (100) nach einem der vorhergehenden Ansprüche,
**dadurch gekennzeichnet, dass**
zwischen dem Oberflächenmaterial (130) und dem Formkörper (110) sowie zwischen dem Oberflächenmaterial (130) und der Bodenplatte (120) eine Haftvermittlerschicht (142) angeordnet, insbesondere aufgesprüht ist.

7. Lagerungskissen (100) nach einem der vorhergehenden Ansprüche,
**dadurch gekennzeichnet, dass**
die Ausnehmung (121) mittels eines Verschlusskörpers (140) verschlossen ist, wobei der Verschlusskörper (140) aus fluiddichtendem Material und/oder einen Ringspalt (143) bildend ausgebildet ist.

8. Verfahren zur Herstellung eines Lagerungskissens (100), nach einem der Ansprüche 1-7 und insbesondere zur Verwendung im medizinischen Bereich, aufweisend folgende Schritte:
- Herstellen oder Bereitstellen (310) eines Formkörpers (110) aus einem fluiddurchlässigen Material und mit einer definierten, insbesondere flächigen, Anlagewandung (112),
- Herstellen oder Bereitstellen (320) einer Bodenplatte (120) aus einem fluiddichten Material mit mindestens einer die Bodenplatte (120) durchsetzenden Ausnehmung (121),
- Verbinden (315) der Bodenplatte (120) mit der Anlagewandung (112) des Formkörpers (110), sodass eine erste Seite (122) der Bodenplatte (120) flächig an der Anlagewandung (112) des Formkörpers (110) anliegt,
- Herstellen oder Bereitstellen (330) eines fluiddichten, thermoplastisch verformbaren Oberflächenmaterials (130) und Versehen des Formkörpers (110) mit dem Oberflächenmaterial (330) mittels eines Vakuumtiefziehverfahrens (340), wobei das Oberflächenmaterial (130) unter Temperatureinwirkung (331) und mittels Druckluft thermoplastisch verformt, insbesondere expandiert (332) und anschließend durch Erzeugen (341) eines Vakuums der Formkörper (110) mit dem Oberflächenmaterial (130) überzogen wird, wobei das Vakuum in dem Formkörper (110) die Ausnehmung (121) der Bodenplatte (120) und das fluiddurchlässige Material (113) des Formkörpers (110) durchströmend erzeugt wird.

9. Verfahren nach Anspruch 8,
**dadurch gekennzeichnet, dass**
bei der Temperatureinwirkung (331) das Oberflächenmaterial (130) auf eine Temperatur zwischen 75°C und 130°C erwärmt wird.

10. Verfahren nach Anspruch 8 oder 9,
**dadurch gekennzeichnet, dass**
der Formkörper (110) während und/oder nach dem Erzeugen (341) von Vakuum in dem fluiddurchlässigen Material (113) in Richtung des Oberflächenmaterials (130) bewegt wird.

11. Verfahren nach Anspruch 8 - 10,
**dadurch gekennzeichnet, dass**
nach dem Beenden des Erzeugens (341) von Vakuum ein Verschließen (351) der Ausnehmung (121) durch einen Verschlusskörper (140) aus fluiddichtendem Material und/oder einen Ringspalt (143) bildend erfolgt.

12. Verfahren nach Anspruch 8 - 11,
**dadurch gekennzeichnet, dass**
nach dem Beenden des Erzeugens (341) von Vakuum ein Abtrennen (352) einer Scheibe der Bodenplatte (120) zum Erzeugen einer Standfläche (141) des Lagerungskissens (100) erfolgt.

## Claims

1. Storage pad (100) for storing body parts, in particular for use in the medical field, having a shaped body (110) manufactured entirely or partially from a fluid-permeable material (113), which shaped body (110) is covered in a portion (111) of its surface with an impermeable surface material (130) abutting against the whole surface of the shaped body (110), **characterised in that**
an abutting wall (112), different from the portion (111), is connected to a base plate (120) made of an impermeable material produced separately from the surface material (130), wherein at least one recess (121) permeating the base plate (120) is formed within this base plate (120).

2. Storage pad (100) according to claim 1,
**characterised in that**
the base plate (120) comprises a first side (122) backing two-dimensionally onto the abutting wall (112) of the shaped body (110), a second side (123) facing away from the first side (122) and at least one generated surface (124), wherein the generated surface (124) connects flush with the shaped body (110) and is covered with the surface material (130).

3. Storage pad (100) according to one of the preceding claims,
**characterised in that**
the surface material (130) comprises an EVA copolymer or is manufactured entirely from an EVA copolymer.

4. Storage pad (100) according to one of the preceding claims,
**characterised in that**
the base plate (120) comprises an impermeable cross-linked polyethylene foam or is manufactured entirely from an impermeable cross-linked polyethylene foam.

5. Storage pad (100) according to one of the preceding claims,
**characterised in that**
the shaped body (110) comprises a fluid-permeable foam or is manufactured entirely from a fluid-permeable foam, and the density of the shaped body (110) is in a range between 24 and 72 kg/m³ and the compression hardness of the shaped body (110) is in a range between 4.3 and 8.0 kPa.

6. Storage pad (100) according to one of the preceding claims,
**characterised in that**
an adhesion promoter layer (142) is arranged, in particular sprayed on, between the surface material (130) and the shaped body (110) as well as between the surface material (130) and the base plate (120).

7. Storage pad (100) according to one of the preceding claims,
**characterised in that**
the recess (121) is sealed by means of a sealing body (140), wherein the sealing body (140) is made of impermeable material and/or to form an annular gap (143).

8. Method for producing a storage pad (100) according to one of claims 1-7 and in particular for use in the medical field, having the following steps:
- producing or providing (310) a shaped body (110) made of a fluid-permeable material and with a defined, in particular two-dimensional, abutting wall (112),
- producing or providing (320) a base plate (120) made of an impermeable material with at least one recess (121) permeating the base plate (120),
- connecting (315) the base plate (120) to the abutting wall (112) of the shaped body (110), with the result that a first side (122) of the base plate (120) abuts the abutting wall (112) of the shaped body (110) two-dimensionally,
- producing or providing (330) an impermeable, thermoplastically deformable surface material (130) and providing the shaped body (110) with the surface material (330) by means of a vacuum forming method (340), wherein the surface material (130) is thermoplastically deformed, in particular expanded (332), by the effect of temperature (331) and by means of compressed air, and the shaped body (110) is subsequently covered with the surface material (130) by creating (341) a vacuum, wherein the vacuum in the shaped body (110) is created to be capable of being flowed through by the recess (121) of the base plate (120) and the fluid-permeable material (113) of the shaped body (110).

9. Method according to claim 8,
**characterised in that**
the surface material (130) is heated to a temperature between 75°C and 130°C by the effect of temperature (331).

10. Method according to claim 8 or 9,
**characterised in that**
while the vacuum is and/or after the vacuum has been generated (341) in the fluid-permeable material (113), the shaped body (110) is moved in direction of the surface material (130).

11. Method according to claims 8-10,
**characterised in that**
the recess (121) is sealed (351) by a sealing body (140) made of fluid-tight material and/or forming an annular gap (143) after the vacuum has finished being generated (341).

12. Method according to claims 8-11,
**characterised in that**
a disk is separated (352) from the base plate (120) to generate a base (141) of the storage pad (100), after the vacuum has finished being generated (341).

## Revendications

1. Coussin de positionnement (100) destiné au positionnement de parties du corps, en particulier pour une utilisation dans le domaine médical, comprenant un corps moulé (110) fabriqué entièrement ou partiellement à partir d'un matériau (113) perméable aux fluides, lequel corps moulé (110) est recouvert, dans une zone partielle (111) de sa surface, d'un matériau de surface (130) étanche aux fluides appliqué intégralement sur le corps moulé (110),
**caractérisé en ce que**
une paroi d'appui (112) définie, différente de la zone partielle (111), est reliée à une plaque de fond (120) fabriquée séparément du matériau de surface (130) et constituée d'un matériau étanche aux fluides, au moins un évidement (121) traversant la plaque de fond (120) étant formé à l'intérieur de cette plaque de fond (120).

2. Coussin de positionnement (100) selon la revendication 1,
**caractérisé en ce que**
la plaque de fond (120) comprend un premier côté (122) plat adjacent à la paroi d'appui (112) du corps moulé (110), un second côté (123) opposé au premier côté (122) et au moins une surface d'enveloppe (124), la surface d'enveloppe (124) étant raccordée à fleur au corps moulé (110) et recouverte du matériau de surface (130).

3. Coussin de positionnement (100) selon l'une des revendications précédentes,
**caractérisé en ce que**
le matériau de surface (130) comprend un copolymère EVA ou est entièrement fabriqué à partir d'un copolymère EVA.

4. Coussin de positionnement (100) selon l'une des revendications précédentes, **caractérisé en ce que**
la plaque de fond (120) comprend une mousse de polyéthylène réticulée étanche aux fluides ou est entièrement fabriquée à partir d'une mousse de polyéthylène réticulée étanche aux fluides.

5. Coussin de positionnement (100) selon l'une des revendications précédentes, **caractérisé en ce que**
le corps moulé (110) comprend une mousse perméable aux fluides ou est entièrement fabriqué à partir d'une mousse perméable aux fluides, et la densité du corps moulé (110) se situe dans une plage comprise entre 24 et 72 kg/m², et la résistance à la compression du corps moulé (110) se situe dans une plage comprise entre 4,3 et 8,0 kPa.

6. Coussin de positionnement (100) selon l'une des revendications précédentes, **caractérisé en ce que**
une couche d'agent adhésif (142) est disposée, en particulier pulvérisée, entre le matériau de surface (130) et le corps moulé (110) ainsi qu'entre le matériau de surface (130) et la plaque de fond (120).

7. Coussin de positionnement (100) selon l'une des revendications précédentes, **caractérisé en ce que**
l'évidement (121) est fermé au moyen d'un corps de fermeture (140), le corps de fermeture (140) étant constitué d'un matériau étanche aux fluides et/ou formant un espace annulaire (143).

8. Procédé de fabrication d'un coussin de positionnement (100), selon l'une des revendications 1 à 7 et en particulier pour une utilisation dans le domaine médical, comprenant les étapes suivantes :
- fabrication ou mise à disposition (310) d'un corps moulé (110) en un matériau perméable aux fluides et avec une paroi d'appui (112) définie, en particulier plane,
- fabrication ou mise à disposition (320) d'une plaque de fond (120) en un matériau étanche aux fluides, avec au moins un évidement (121) traversant la plaque de fond (120),
- assemblage (315) de la plaque de fond (120) avec la paroi d'appui (112) du corps moulé (110) de manière à ce qu'un premier côté (122) de la plaque de fond (120) repose à plat contre la paroi d'appui (112) du corps moulé (110),
- fabrication ou mise à disposition (330) d'un matériau de surface (130) étanche aux fluides et thermoplastiquement déformable et application du matériau de surface (330) sur le corps moulé (110) au moyen d'un procédé d'emboutissage sous vide(340), le matériau de surface (130) étant déformé thermoplastiquement, en particulier expansé (332), sous l'effet de la température (331) et au moyen d'air comprimé, puis recouvert du matériau de surface (130) par création (341) d'un vide, le corps moulé (110) étant recouvert du matériau de surface (130), le vide dans le corps moulé (110) étant généré en traversant l'évidement (121) de la plaque de fond (120) et le matériau (113) perméable aux fluides du corps moulé (110).

9. Procédé selon la revendication 8,
**caractérisé en ce que**
sous l'effet de la température (331), le matériau de surface (130) est chauffé à une température comprise entre 75 °C et 130 °C.

10. Procédé selon la revendication 8 ou 9,
**caractérisé en ce que**
le corps moulé (110) est déplacé en direction du matériau de surface (130) pendant et/ou après la création (341) du vide dans le matériau (113) perméable aux fluides.

11. Procédé selon les revendications 8 à 10,
**caractérisé en ce que**
après la fin de la création (341) du vide, une fermeture (351) de l'évidement (121) est effectuée à l'aide d'un corps de fermeture (140) en un matériau étanche aux fluides et/ou en formant un espace annulaire (143).

12. Procédé selon les revendications 8 à 11,
**caractérisé en ce que**
après la fin de la création (341) du vide, une séparation (352) d'une tranche de la plaque de fond (120) est effectuée pour créer une surface d'appui (141) du coussin de positionnement (100).
